# FASCICULE DE BREVET EUROPEEN

(11) **EP 3 973 158 B1**
(45) Date de publication et mention de la délivrance du brevet: **29.03.2023**
(21) Numéro de dépôt: 20742342.7
(22) Date de dépôt: 16.06.2020
(51) Int. Cl.: F02C 7/32, F01D 25/18, F02C 7/36, F01D 25/20

(54) **AGENCEMENT DE TURBOMACHINES D'AERONAUTIQUE COMPRENANT UNE POMPE DE LUBRIFICATION ENTRAINEE PAR DEUX ENGRENAGES OBLIQUES**
TURBOMASCHINENANORDNUNG FÜR EIN FLUGZEUG MIT EINER DURCH ZWEI SCHRÄGZAHNRÄDER ANGETRIEBENEN SCHMIERPUMPE
AIRCRAFT TURBOMACHINE ARRANGEMENT COMPRISING A LUBRICATION PUMP DRIVEN BY TWO OBLIQUE GEARS

(30) Priorité: 03.07.2019 FR 1907397
(43) Date de publication de la demande: 30.03.2022
(73) Titulaire: SAFRAN AIRCRAFT ENGINES, 75015 Paris (FR)
(72) Inventeur: BARET, Emmanuel, Fabrice, Marie, 77550 MOISSY-CRAMAYEL (FR); BECOULET, Julien, Fabien, Patrick, 77550 MOISSY-CRAMAYEL (FR); BOSCO, Franck, Emmanuel, 77550 MOISSY-CRAMAYEL (FR); BRAULT, Michel, Gilbert, Roland, 77550 MOISSY-CRAMAYEL (FR); LEVISSE, Paul, Ghislain, Albert, 77550 MOISSY-CRAMAYEL (FR)
(74) Mandataire: Brevalex
(86) Numéro de dépôt international: PCT/FR2020/051028
(87) Numéro de publication internationale: WO 2021/001609

(56) Documents cités:
- US-A1- 2016 222 975
- US-A1- 2017 051 672

## Description

Le sujet de l'invention présente est un agencement de turbomachine d'aéronautique comprenant une pompe de lubrification entraînée par deux engrenages obliques.

Cette pompe sert à injecter de l'huile dans un équipement à lubrifier, tel qu'un réducteur de vitesse, situé par exemple entre deux corps tournants, porteurs d'aubes, de la turbomachine. Une application particulièrement envisagée, sans être exclusive, est un tel agencement dans une turbomachine à soufflante amont, dans lequel le réducteur relie l'arbre de la soufflante à un arbre d'un corps basse pression, et la pompe est une pompe d'un circuit auxiliaire de lubrification, entraînée par l'un de ces arbres.

Les équipements considérés ici doivent être lubrifiés en toutes circonstances quand la machine fonctionne pour éviter leur endommagement, mais certaines circonstances particulières peuvent empêcher le bon fonctionnement de la pompe responsable de la lubrification. Cela peut être le cas si le corps tournant entraînant la pompe tourne dans un sens inverse du sens habituel, en refoulant alors l'huile dans la bâche d'alimentation, tandis que le réducteur reste entraîné. Cela peut se produire dans des conditions de rotation libre (« windmilling ») des corps tournants du moteur, par exemple au sol sous l'effet du vent, où la soufflante peut tourner en sens inverse du sens normal.

Le sujet de l'invention est un perfectionnement de tels agencements, qui permet de maintenir la lubrification de l'équipement même en cas d'inversion du sens de rotation du corps tournant qui entraîne la pompe.

Les moyens plus spécialement constitutifs de l'invention permettent de proposer un agencement simple et compact, en évitant notamment de devoir dupliquer la pompe ou d'autres constituants de l'agencement pour le rendre apte à alimenter l'équipement quel que soit le sens de rotation du corps tournant. L'agencement comprend encore une pompe unique, entraînée par une transmission unique, dotée seulement d'un mécanisme absorbant les inversions de sens d'entraînement, de manière que le mouvement exercé sur la pompe soit toujours dans le même sens. Un autre avantage est qu'une grande liberté d'aménagement de l'agencement dans l'espace libre, souvent exigu, de la turbomachine est rendue possible.

US 2016/0222975 A1 décrit un dispositif de mise en rotation d'une pompe de lubrification par un arbre pouvant tourner dans les deux sens, au moyen d'un dispositif de transmission différent de celui de l'invention.

US 2017/00151672 A1 décrit un dispositif pour entraîner une boîte de vitesse d'un équipement auxiliaire d'une turbomachine par un corps tournant à l'entrée de la turbomachine.

Sous une forme générale, l'invention est ainsi relative à un agencement de turbomachine d'aéronautique comprenant un corps tournant autour d'un axe et porteurs d'aubes, un équipement à lubrifier et un circuit de lubrifiant de l'équipement comprenant une pompe, et une transmission d'entraînement reliant le corps tournant de la turbomachine à la pompe, caractérisé en ce que la transmission comprend un premier arbre tournant relié à la pompe, deux pignons d'axes de rotation parallèle au premier arbre, et reliés au premier arbre par deux roues libres de sens de rotation glissante identiques, et une roue dentée engrenant avec chacun des pignons en formant deux engrenages obliques et entraînée par un second arbre tournant, connecté au corps tournant par une transmission.

La seule portion de l'agencement qui est donc dédoublée est le pignon muni d'une roue libre, tout le reste de la transmission étant actif dans les deux sens de rotation du corps tournant.

Le second arbre tournant peut faire un angle quelconque avec l'axe du corps tournant. Cet angle sera souvent droit ou proche de l'angle droit, mais il pourra être quelconque, y compris nul.

Une configuration dans laquelle l'invention pourra particulièrement être appliquée est caractérisée en ce que l'équipement est un réducteur de vitesse de rotation, le réducteur étant placé entre de soufflante et un corps basse pression de la turbomachine, et le corps tournant entraînant la pompe est le corps de soufflante.

Selon certaines caractéristiques optionnelles et avantageuses de l'invention :
- les pignons sont tous deux portés par le premier arbre, et donc coaxiaux à lui, par l'intermédiaire des roues libres ;
- l'équipement est un réducteur de vitesse de rotation, et le circuit de lubrification comprend encore une bâche à huile d'alimentation, et un conduit de lubrification originaire de la bâche à huile, s'étendant jusqu'à l'équipement et qui traverse la pompe ;
- les angles des engrenages obliques sont tous deux droits ;
- la pompe est adjacente à un roulement servant de support à un arbre porteur d'une denture reliée à des engrenages entraînant la pompe ;
- les pignons sont coniques, et la roue dentée a aussi une denture conique ;
- le corps tournant porte une denture reliée au second arbre par un engrenage unique ;
- l'agencement comprend une chape enveloppant le pignon et ladite roue dentée, la chape étant munie de deux paliers de support du premier arbre et d'un palier de support du second arbre.

Un autre aspect général de l'invention concerne les possibilités d'agencement offertes par le dispositif de transmission comprenant le second arbre tournant, entraînant la roue dentée et s'étendant avantageusement jusqu'à la denture appartenant au corps tournant d'entraînement. Ce second arbre peut être perpendiculaire à l'axe du corps tournant, ce qui permet de déporter l'agencement de pompe d'une distance quelconque dans la direction radiale de la turbomachine ; il peut aussi être incliné dans la direction de l'axe du corps tournant, ce qui permet aussi de déporter l'agencement d'une distance axiale quelconque dans la turbomachine.

Il devient ainsi possible de placer l'agencement au mieux des possibilités d'aménagement dans les volumes vides proches de l'équipement à lubrifier. Une possibilité intéressante peut consister, comme on l'a vu, à rendre l'agencement adjacent à un roulement lui-même adjacent à l'équipement ; une autre possibilité intéressante consiste à rendre l'agencement adjacent à la bâche à huile pour réduire ou éliminer les fonctionnements à vide de la pompe ; il est même possible de rendre la pompe intérieure à la bâche à huile.

Un autre aspect de l'invention est une turbomachine comprenant un équipement selon ce qui précède.

Les différents aspects, caractéristiques et avantages de l'invention seront maintenant décrits plus en détail au moyen des figures suivantes, qui illustrent une réalisation préférée de celle-là, donnée à titre purement illustratif :
Figure 1 est une vue générale d'une turbomachine, indiquant une position possible de l'invention ;
Figure 2 représente une réalisation de l'invention en général ;
Figure 3 une vue de détail de l'extrémité de l'agencement et de la pompe ;
Figure 4 une coupe réalisée à travers ladite portion ;
Figure 5 une deuxième réalisation de l'invention ;
Figure 6 une troisième réalisation de l'invention ;
Figure 7 une quatrième réalisation de l'invention.

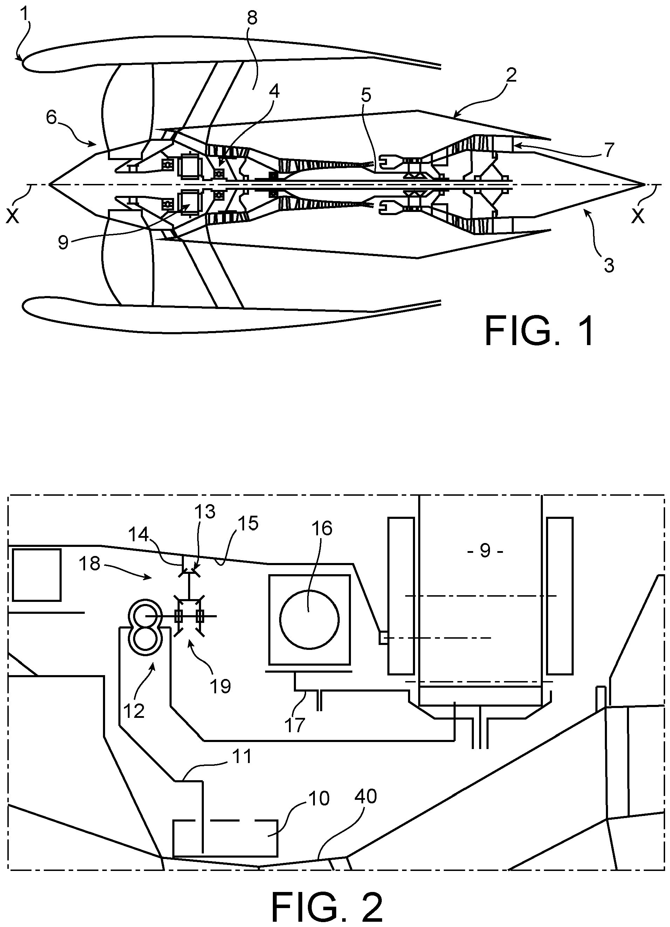

On se reporte à la figure 1.

Une turbomachine comprend, dans une nacelle 1 annulaire, un stator 2 aussi annulaire, et un rotor 3 tournant dans un évidement central du stator 2, ce rotor 3 comprenant un corps basse pression 4 et un corps haute pression 5 concentriques. On référence par X-X l'axe autour duquel tourne le rotor 3, et tous les corps tournants, y compris la soufflante 6, qui le composent. Le corps basse pression 4 est prolongé par une soufflante 6 à l'amont de la turbomachine et de l'écoulement des gaz qui la traverse. La turbomachine comprend des compresseurs, une chambre de combustion et des turbines, qui sont des éléments classiques sur lesquels on ne reviendra pas, en aval de la soufflante 6. La réalisation représentée comprend une veine primaire 7 principale, s'étendant autour du rotor 3 et entourée par le stator 2, et une veine secondaire 8 entourant le stator 2 et entourée par la nacelle 1, et la soufflante 6 s'étend devant la veine primaire 7 comme devant la veine secondaire 8 ; mais cette configuration n'est pas nécessaire pour implanter l'invention.

Un réducteur 9 de vitesse relie les rotations du corps basse pression 4 à celles de la soufflante 6, et il doit être lubrifié en permanence dès qu'il n'est plus à l'arrêt. On dispose donc un circuit de lubrification, représenté sommairement à la figure 2, et qui comprend une bâche à huile 10 d'alimentation, un conduit de lubrification 11 originaire de la bâche à huile 10, s'étendant jusqu'au réducteur 9 et comprenant une pompe 12, qu'il traverse, chargée d'assurer la circulation de l'huile vers le réducteur 9. La bâche à huile 10 est avantageusement placée en contrebas du réducteur 9 (à une orientation normale de la turbomachine) dans un carter 40 de la turbomachine solidaire du stator 17. Cette disposition permet à l'huile d'être dirigée du réducteur 9 vers la bâche à huile 10 par force de gravité et d'être ensuite renvoyée dans le réducteur 9 par le dispositif selon l'invention dès que la soufflante 6 n'est pas à l'arrêt. La lubrification est ainsi continûment assurée. La pompe 12 est une pompe à engrenages. Elle est entraînée par des engrenages extérieurs 13 à partir d'une denture 14 dépendant d'un arbre de soufflante 15, entraîné par la soufflante 6 et connecté au réducteur 9. L'engrenage extérieur 13 est de préférence unique entre l'arbre de soufflante 15 et un second arbre 28 décrit ci-dessous. Le corps basse pression 4 est aussi connecté au réducteur 9. La pompe 12 peut être adjacente à un roulement 16 servant au support de l'arbre de soufflante 15 par une portée cylindrique 17 du stator 2, sans que cela soit essentiel.

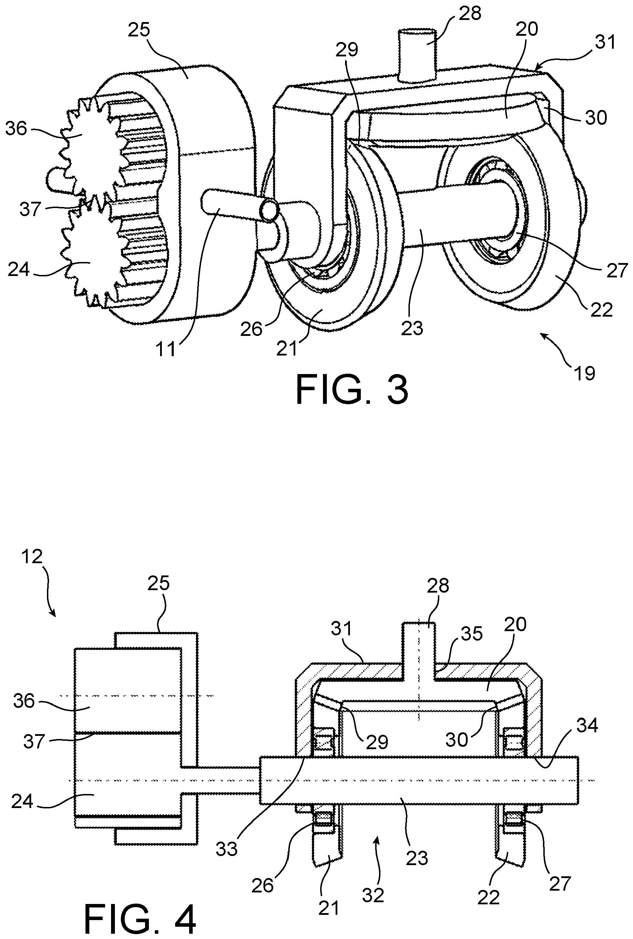

La transmission 18 permettant d'entraîner la pompe 12 à partir de la denture 14 comprend encore un double engrenage 19 qu'on va décrire au moyen de la figure 3.

Ce double engrenage 19 comprend une roue dentée 20 engrenant par deux portions opposées de denture avec deux pignons 21 et 22 qui sont coaxiaux le long d'un arbre, dit premier arbre 23, d'entraînement de la pompe 12 et plus précisément d'un pignon d'attaque 24 situé à l'intérieur d'un carter 25 de la pompe 12. Les pignons 21 et 22 sont identiques et soutenus par le premier arbre 23 par l'intermédiaire de roues libres, respectivement 26 et 27, dont les sens de rotation glissante sont identiques. La roue dentée 20 est reliée à l'engrenage extérieur 13 par le second arbre 28, qui l'entraîne. Le premier arbre 23 et le second arbre 28 sont perpendiculaires, et les pignons 21 et 22, ainsi que la roue dentée 20 sont à denture conique et forment des engrenages 29 et 30 à angle droit. Les engrenages 29 et 30 pourraient être remplacés par d'autres engrenages à angle droit, avec d'autres formes de denture. L'ensemble est soutenu par une chape 31 qui contient la roue dentée 20 et les pignons 21 et 22 dans son espace central 32, et soutient le premier arbre 23 par des paliers 33 et 34, et le second arbre 28 par un palier 35, ces paliers pouvant être des paliers lisses à revêtement anti-usure par exemple. La chape 31 et le carter 25 sont fixés au stator de la turbomachine par des moyens non représentés.

Comme les sens de rotation glissante des roues libres 26 et 27 sont identiques, on voit que le premier arbre 23 est entraîné dans un sens par l'engrenage 29 quand le second arbre 28 et la roue dentée 20 tournent dans un sens, et qu'il est entraîné dans le même sens par l'autre engrenage 30 quand le second arbre 28 et la roue dentée 20 tournent dans le sens contraire. Les sens des mouvements du pignon d'attaque 24 et d'autre pignon 36 à l'intérieur de la pompe 12 sont donc toujours identiques, et l'huile est entraînée toujours dans le même sens par le conduit 11, qui débouche à l'intérieur du carter 25 devant l'engrenage 37 formé par ces deux pignons 24 et 36. On voit donc que le dispositif est extrêmement simple et compact, et qu'il implique la duplication d'un nombre extrêmement réduit de pièces pour assurer la permanence de l'écoulement d'huile dans le bon sens, quel que soit le sens de rotation du corps tournant qui entraîne la pompe 12, ici l'arbre de soufflante 15. Le choix des dentures coniques pour la roue dentée 20 et les pignons 21 et 22 accroît la robustesse et la compacité du dispositif.

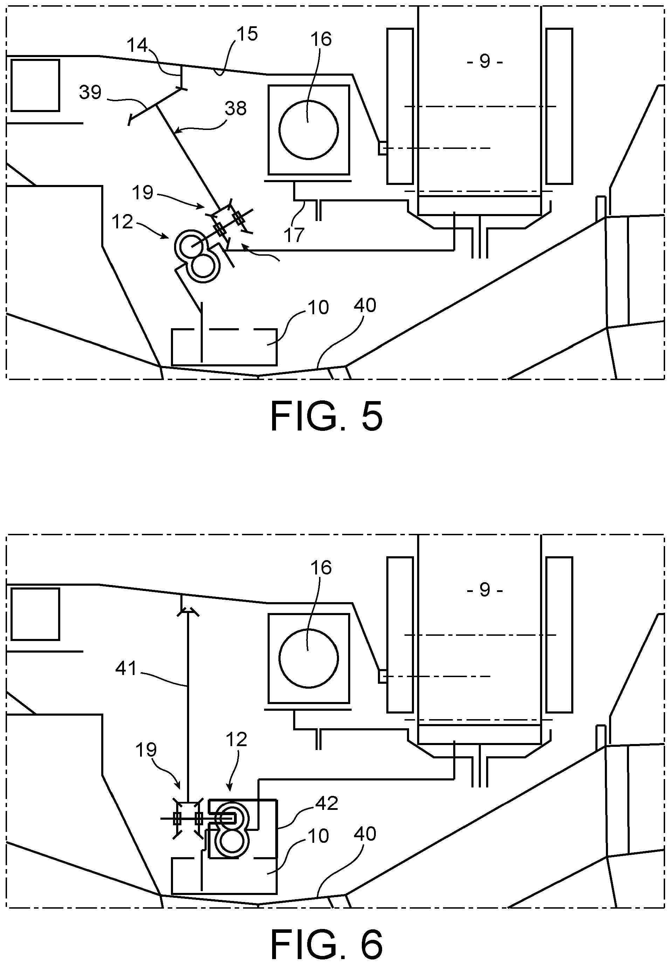

La figure 5 illustre une autre réalisation possible de l'invention. Dans la réalisation précédente, le second arbre 28 était un arbre s'étendant en direction radiale de la turbomachine et de longueur courte, afin de placer l'agencement comprenant essentiellement la pompe 12 et le double engrenage 19 près du roulement 16. Cela n'est pas nécessairement avantageux, et l'arbre 28 pourrait être remplacé par un arbre 38 de direction oblique, donc pourvu d'une inclinaison dans la direction de l'axe X-X, qui permettrait de déporter aussi la pompe 12 dans la direction axiale, avec l'avantage immédiatement visible que le conduit de lubrification reliant la bâche à huile 10 au réducteur 9 serait raccourci. Dans la réalisation représentée ici, la pompe 12 est à un rayon intermédiaire à la bâche à huile 10 d'une part, le roulement 16 et le réducteur 9 d'autre part, et sa position axiale, déportée vers l'arrière de la turbomachine par rapport à la réalisation précédente, est proche de celle de la bâche à huile 10.

Une autre construction à considérer est celle de la figure 6, où le second arbre 28 court de la première réalisation et le second arbre 38 de longueur moyenne de la deuxième réalisation sont remplacés par un second arbre 41 long, afin de placer l'agencement composé de la pompe 12 et du double engrenage 19 adjacent à la bâche à huile 10. L'arbre 41 peut être perpendiculaire ou non à l'axe X-X. Dans une variante de réalisation qui est représentée ici, il sera même possible de placer la pompe 12 à l'intérieur de la bâche à huile, éventuellement modifiée d'après le contour 42 pour pouvoir la contenir. Cette disposition permet de réduire ou même de supprimer la portion du conduit de lubrification 11 en amont de la pompe 12, et donc les durées pendant lesquelles la pompe 12 risque de travailler à vide, si cette portion du conduit de lubrification s'est vidée.

D'une façon plus générale, il est donc possible d'ajuster à la fois la longueur et l'inclinaison de l'arbre de transmission du mouvement au double engrenage 19, afin de placer celui-ci et la pompe 12 à l'endroit le plus approprié. Il peut alors devenir possible et intéressant de modifier d'autres aménagements environnants concernant, par exemple, la soufflante 6 en exploitant le déplacement de la pompe 12.

Quelques autres possibilités de construction vont maintenant être explicitées. Il n'est tout d'abord pas nécessaire que le premier arbre 23, qui entraîne la pompe 12, soit directement entraîné par l'une ou l'autre des roues libres 26 et 27, ni que les axes des roues libres 26 et 27 soient alignés entre eux ou avec l'axe du pignon d'attaque 24 : des transmissions, telles des réducteurs de vitesse, pourraient être ajoutées aux réalisations décrites jusqu'ici pour ajuster la vitesse de rotation du pignon d'attaque 24 en fonction de celle de l'une ou l'autre des roues libres 26 et 27, ou pour donner une plus grande liberté de disposition des constituants de l'agencement. La disposition du premier arbre 23 commun au pignon d'attaque 24 et à chacune des roues libres 26 et 27 a certes l'avantage de la simplicité.

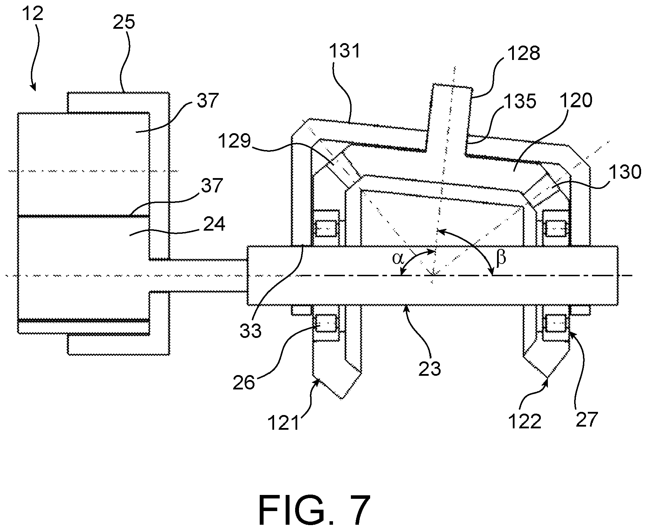

On abordera maintenant une autre variante possible de réalisation de l'invention, d'après laquelle les engrenages coniques 29 et 30 à angles droit sont remplacés, d'après la figure 7, par d'autres engrenages coniques 129 et 130, dont les valeurs α et β sont différentes. Les constituants modifiés par rapport aux réalisations précédentes portent ici les mêmes références augmentées de 100. α et β sont aussi les angles entre l'axe de rotation du second arbre 128 et les axes de rotation des pignons 121 et 122 ; ici, α > β et α + β = 180°. Dans cette construction, les pignons, maintenant 121 et 122, ont des diamètres et des nombres de dents différents, la roue dentée 120 qui les entraîne est inclinée par rapport au premier arbre 23 inchangé, le second arbre 128 est incliné en conséquence, et la chape 131 peut être modifiée en fonction de ces autres différences de construction. Le reste du dispositif peut rester inchangé. Cette variante de réalisation a l'avantage de pouvoir entraîner le pignon d'attaque 24 à des vitesses différentes en fonction de celle du second arbre 128 d'après le sens de rotation de l'arbre de soufflante 15, qui correspond à des situations où les besoins de lubrification peuvent être différents.

## Revendications

1. Agencement de turbomachine d'aéronautique comprenant un corps tournant autour d'un axe et porteur d'aubes, un équipement (9) à lubrifier et un circuit (10, 11, 12) de lubrifiant de l'équipement comprenant une pompe (12), et une transmission d'entraînement reliant le corps tournant (15) de la turbomachine à la pompe, **caractérisé en ce que** la transmission comprend un premier arbre (23) tournant relié à la pompe, deux pignons (21, 22), d'axes de rotation parallèles au premier arbre, et reliés au premier arbre par deux roues libres (26, 27) de sens de rotation glissante identiques, et une roue dentée (20) engrenant avec chacun des pignons en formant deux engrenages obliques, et entraînée par un second arbre tournant (28, 38, 41), connecté au corps tournant par une transmission.

2. Agencement de turbomachine selon la revendication 1, **caractérisé en ce que** l'équipement (9) est un réducteur de vitesse de rotation, et ledit corps tournant (15, 6) est un corps de soufflante (6) de la turbomachine, le réducteur étant placé entre le corps de soufflante et un corps basse pression (4) de la turbomachine.

3. Agencement de turbomachine selon l'une quelconque des revendications 1 ou 2, **caractérisé en ce que** le circuit de lubrification comprend encore une bâche à huile (10) d'alimentation, et un conduit de lubrification (11) originaire de la bâche à huile (10), s'étendant jusqu'à l'équipement (9) et qui traverse la pompe (12).

4. Agencement de turbomachine selon l'une quelconque des revendications 1 à 3, **caractérisé en ce que** la pompe (12) est adjacente à un roulement (16) servant de support audit corps tournant (15).

5. Agencement de turbomachine selon la revendication 4, **caractérisé en ce que** le corps tournant (15) porte une denture (14) reliée au second arbre (28) par un engrenage (13) unique.

6. Agencement de turbomachine selon l'une quelconque des revendications 1 à 5, **caractérisé en ce qu'**il comprend une chape (31) enveloppant les pignons et ladite roue dentée, et munie de deux paliers de support du premier arbre et d'un palier de support du second arbre.

7. Agencement de turbomachine selon l'une quelconque des revendications 1 à 6, **caractérisé en ce que** les pignons sont tous deux portés par le premier arbre, et coaxiaux au premier arbre, par l'intermédiaire des roues libres.

8. Agencement de turbomachine selon l'une quelconque des revendications 1 à 7, **caractérisé en ce que** les engrenages obliques sont tous deux à angle droit.

9. Agencement de turbomachine selon l'une quelconque des revendications 1 à 8, **caractérisé en ce que** le second arbre (28) est perpendiculaire audit axe du corps tournant (15).

10. Agencement de turbomachine selon l'une quelconque des revendications 1 à 8, **caractérisé en ce que** le second arbre (38) est incliné en direction dudit axe du corps tournant (15).

11. Agencement de turbomachine selon la revendication 3, **caractérisé en ce que** la pompe (12) est adjacente ou intérieure à la bâche à huile (10, 42).

12. Turbomachine, **caractérisée en ce qu'**elle comprend un agencement conforme à l'une quelconque des revendications précédentes.

## Patentansprüche

1. Turbomaschinenanordnung für ein Flugzeug, die einen um eine Achse drehenden und Schaufeln tragenden Körper, eine zu schmierende Ausrüstung (9) und einen eine Pumpe (12) umfassenden Schmiermittelkreis (10, 11, 12) für die Ausrüstung, und eine Antriebsübertragung umfasst, die den drehenden Körper (15) der Turbomaschine mit der Pumpe verbindet, **dadurch gekennzeichnet, dass** die Übertragung eine mit der Pumpe verbundene erste drehende Welle (23), zwei Ritzel (21, 22), die zur ersten Welle parallele Drehachsen aufweisen und über zwei Freiläufe (26, 27) mit gleicher Gleitdrehrichtung mit der ersten Welle verbunden sind, und ein Zahnrad (20) umfasst, das unter Bildung von zwei Schräggetrieben mit jedem der Ritzel ineinandergreift und von einer zweiten drehenden Welle (28, 38, 41), die über eine Übertragung mit dem drehenden Körper verbunden ist, angetrieben wird.

2. Turbomaschinenanordnung nach Anspruch 1, **dadurch gekennzeichnet, dass** es sich bei der Ausrüstung (9) um einen Drehzahlreduzierer handelt, und es sich bei dem drehenden Körper (15, 6) um einen Lüfterkörper (6) der Turbomaschine handelt, wobei der Reduzierer zwischen dem Lüfterkörper und einem Niederdruckkörper (4) der Turbomaschine angebracht ist.

3. Turbomaschinenanordnung nach einem der Ansprüche 1 oder 2, **dadurch gekennzeichnet, dass** der Schmierkreis weiter eine Beschickungsölwanne (10) und eine Schmierleitung (11) umfasst, die von der Ölwanne (10) entspringt, sich bis zur Ausrüstung (9) erstreckt und die durch die Pumpe (12) verläuft.

4. Turbomaschinenanordnung nach einem der Ansprüche 1 bis 3, **dadurch gekennzeichnet, dass** die Pumpe (12) an ein Wälzlager (16) angrenzt, das als Stütze für den drehenden Körper (15) dient.

5. Turbomaschinenanordnung nach Anspruch 4, **dadurch gekennzeichnet, dass** der drehende Körper (15) eine Verzahnung (14) trägt, die über ein einziges Getriebe (13) mit der zweiten Welle (28) verbunden ist.

6. Turbomaschinenanordnung nach einem der Ansprüche 1 bis 5, **dadurch gekennzeichnet, dass** sie eine Haube (31) umfasst, die die Ritzel und das Zahnrad umhüllt, und mit zwei Stützlagern für die erste Welle und einem Stützlager für die zweite Welle ausgestattet ist.

7. Turbomaschinenanordnung nach einem der Ansprüche 1 bis 6, **dadurch gekennzeichnet, dass** die Ritzel beide von der ersten Welle, und koaxial zur ersten Welle mithilfe der Freiläufe getragen werden.

8. Turbomaschinenanordnung nach einem der Ansprüche 1 bis 7, **dadurch gekennzeichnet, dass** die Schräggetriebe beide rechtwinklig sind.

9. Turbomaschinenanordnung nach einem der Ansprüche 1 bis 8, **dadurch gekennzeichnet, dass** die zweite Welle (28) senkrecht zur Achse des drehenden Körpers (15) steht.

10. Turbomaschinenanordnung nach einem der Ansprüche 1 bis 8, **dadurch gekennzeichnet, dass** die zweite Welle (38) in Richtung der Achse des drehenden Körpers (15) geneigt ist.

11. Turbomaschinenanordnung nach Anspruch 3, **dadurch gekennzeichnet, dass** die Pumpe (12) an die Ölwanne (10, 42) angrenzt oder sich in dieser befindet.

12. Turbomaschine, **dadurch gekennzeichnet, dass** sie eine Anordnung entsprechend einem der vorstehenden Ansprüche umfasst.

## Claims

1. Aeronautical turbine engine comprising a body rotating about an axis and carrying blades, equipment (9) to be lubricated and a circuit (10, 11, 12) for lubricating the equipment comprising a pump (12), and a drive transmission connecting the rotating body (15) of the turbine engine to the pump, **characterised in that** the transmission comprises a first rotating shaft (23) connected to the pump, two pinions (21, 22) with rotation axes parallel to the first shaft, and connected to the first shaft by two free-wheels (26, 27) with identical directions of sliding rotation, and a toothed wheel (20) meshing with each of the pinions forming two oblique gears and driven by a second rotating shaft (28, 38, 41), connected to the rotating body by a transmission.

2. Turbine engine arrangement according to claim 1, **characterised in that** the equipment (9) is a rotation-speed reducer, and said rotating body (15, 6) is a fan body (6) of the turbine engine, the reducer being placed between the fan body and a low-pressure spool (4) of the turbine engine.

3. Turbine-engine arrangement according to either one of claims 1 or 2, **characterised in that** the lubrication circuit also comprises a feed oil tank (10), and a lubrication pipe (11) originating in the oil tank (10), extending as far as the equipment (9) and which passes through the pump (12).

4. Turbine-engine arrangement according to any one of claims 1 to 3, **characterised in that** the pump (12) is adjacent to a rolling bearing (16) serving as a support for said rotating body (15).

5. Turbine-engine arrangement according to claim 4, **characterised in that** the rotating body (15) carries a set of teeth (14) connected to the second shaft (28) by a single gear (13).

6. Turbine-engine arrangement according to any one of claims 1 to 5, **characterised in that** it comprises a cover (31) enveloping the pinion and said toothed wheel, and provided with two bearings supporting the first shaft and with a bearing supporting the second shaft.

7. Turbine-engine arrangement according to any one of claims 1 to 6, **characterised in that** the pinions are both carried by the first shaft, and coaxial with the first shaft, by means of the free-wheels.

8. Turbine-engine arrangement according to any one of claims 1 to 7, **characterised in that** the oblique gears are both at a right angle.

9. Turbine-engine arrangement according to any one of claims 1 to 8, **characterised in that** the second shaft (28) is perpendicular to said axis of the rotating body (15).

10. Turbine-engine arrangement according to any one of claims 1 to 8, **characterised in that** the second shaft (38) is inclined in the direction of said axis of the rotating body (15).

11. Turbine-engine arrangement according to claim 3, **characterised in that** the pump (12) is adjacent to or internal to the oil tank (10, 42).

12. Turbine engine, **characterised in that** it comprises an arrangement according to any one of the preceding claims.
